(19) Europäisches Patentamt / European Patent Office / Office européen des brevets

(11) **EP 4 075 343 A1**

(12) **EUROPEAN PATENT APPLICATION**
published in accordance with Art. 153(4) EPC

(43) Date of publication:
**19.10.2022 Bulletin 2022/42**

(51) International Patent Classification (IPC):
***G06N 3/08*** *(2006.01)*

(21) Application number: **19958452.5**

(52) Cooperative Patent Classification (CPC):
**G06N 3/04; G06N 3/08; H04L 65/40**

(22) Date of filing: **31.12.2019**

(86) International application number:
**PCT/CN2019/130638**

(87) International publication number:
**WO 2021/134519 (08.07.2021 Gazette 2021/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129, (CN)**

(72) Inventors:
• **WANG, Yanyan
Shenzhen, Guangdong 518129 (CN)**
• **FENG, Yuan
Shenzhen, Guangdong 518129 (CN)**
• **WU, Zuguang
Shenzhen, Guangdong 518129 (CN)**
• **ZHOU, Peng
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **DEVICE AND METHOD FOR REALIZING DATA SYNCHRONIZATION IN NEURAL NETWORK INFERENCE**

(57)    This application provides an apparatus and a method for implementing data synchronization during neural network inference, relates to an artificial intelligence (Artificial Intelligence, AI) field, and specifically relates to neural network inference technologies. The apparatus includes: a memory, configured to store a first feature map; and a neural-network processing unit NPU, configured to: obtain the first feature map from the memory, where the first feature map includes M blocks, and M is a positive integer; separately perform, in an asynchronous manner, inference computation at at least two layers of a neural network model on the M blocks to obtain M inference results, where the asynchronous manner means that data synchronization is not performed on an intermediate result obtained after inference computation at one layer of the neural network model is performed on each block, and inference computation at a next layer continues to be performed on the intermediate result; and perform data synchronization on the M inference results to obtain synchronized data. Because the NPU performs data synchronization only after completing inference computation at the at least two layers of the neural network model, a quantity of data synchronization times in a neural network inference process is relatively small, and less data migration overheads are generated.

FIG. 7

The flow chart shows the following steps:
- S700: A digital signal processor ISP performs image processing on an original image captured by a camera lens, and stores an image processing result as an input image in a memory
- S701: An NPU obtains a first feature map, where the first feature map includes M blocks, and M is a positive integer
- S702: The NPU separately performs inference computation at at least two layers of a neural network model on the M blocks in an asynchronous manner, to obtain M inference results
- S703: The NPU performs data synchronization on the M inference results to obtain synchronized data
- S704: The NPU stores the synchronized data in one of the memory and a cache, where the memory is an external memory of the NPU
- S705: The NPU extracts the synchronized data from the memory or the cache
- S706: The NPU uses the synchronized data as a second feature map to perform inference computation at one or more layers of the neural network model

## Description

## TECHNICAL FIELD

Embodiments of the present invention relate to neural network inference technologies, and in particular, to an apparatus and a method for implementing data synchronization during neural network inference.

## BACKGROUND

Artificial intelligence (Artificial Intelligence, AI) is a theory, a method, a technology, or an application system that simulates, extends, and expands human intelligence by using a digital computer or a machine controlled by the digital computer, to perceive an environment, obtain knowledge, and achieve an optimal result based on the knowledge. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have perceiving, inference, and decision-making functions. Researches in the field of artificial intelligence include a robot, natural language processing, computer vision, decision-making and inference, human-computer interaction, recommendation and search, AI fundamentals, and the like.

Computer vision is an integral part of various intelligent/autonomic systems in various application fields, for example, fields such as a manufacturing industry, inspection, document analysis, medical diagnosis, and military affairs. Computer vision is knowledge about how to use a camera/video camera and a computer to obtain required data and information of a photographed subject. To be vivid, eyes (the camera/video camera) and a brain (an algorithm) are installed on the computer to replace human eyes to identify, track, and measure a target, and the like, so that the computer can perceive an environment. Perceiving may be considered as extracting information from a perceptual signal. Therefore, computer vision may also be considered as a science of studying how to make an artificial system perform "perceiving" from an image or multi-dimensional data. Generally, computer vision uses various imaging systems functioning like visual organs to obtain input information, and then the computer, functioning like a brain, processes and interprets the input information. A final study objective of computer vision is to enable a computer to observe and understand the world through vision in a way that human beings do, and have a capability of automatically adapting to an environment.

As an important method of computer vision, a neural network is widely used in the fields such as target classification and detection. After image data is input, a trained neural network is used to calculate required semantic information, such as an object type. This process is neural network inference (Neural Network Inference).

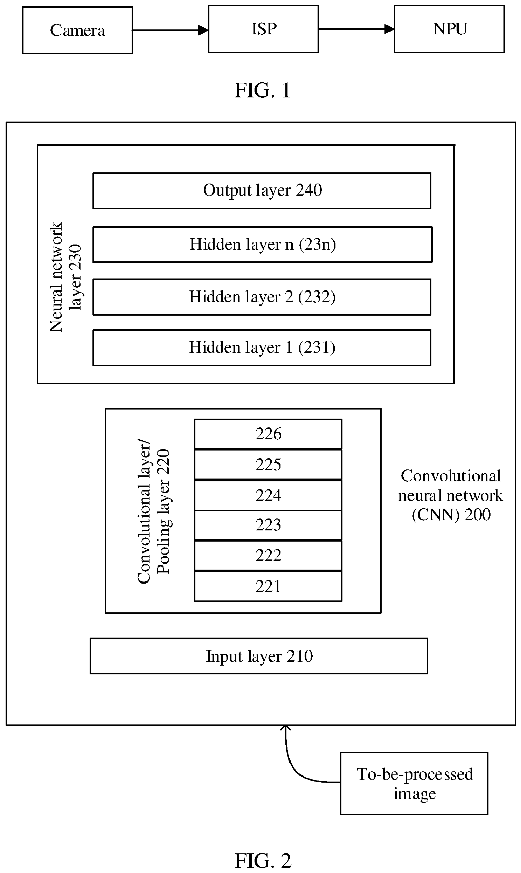

FIG. 1 is a diagram of an architecture in which neural network inference is performed on image data. The architecture includes a camera (or referred to as a camera lens), an image signal processor (Image Signal Processor, ISP), and a neural-network processing unit (Neural-network Processing Unit, NPU). Specifically, that the NPU performs inference on raw data collected by the camera includes the following steps.

Step 1: The camera collects the raw data (Raw Data). Because the raw data is related to a camera filter, a data format is not friendly to naked eyes and a neural network, and relatively much noise data and unnecessary information are included, the camera sends the raw data to the ISP for image processing.

Step 2: After receiving the raw data, the ISP performs related processing on the raw data, including steps such as denoising, color gamut conversion, sharpening, and compression, to convert the raw data into image data.

Step 3: The NPU reads the image data processed by the ISP, loads a trained neural network model, and performs neural network inference to obtain an inference result.

In step 3, in a process of performing neural network inference, the NPU needs to perform data synchronization on a plurality of pieces of intermediate data generated in the inference process, and then continues to perform a subsequent inference process based on synchronized data. Data synchronization means that a next operation is not performed on the generated data, but after the plurality of pieces of data are all received, the plurality of pieces of data are used as a whole to enable a next operation to be performed. Selection of a data synchronization point affects data migration overheads. Therefore, in a process of performing neural network inference by the NPU, selection of a time point at which data synchronization is performed affects the data migration overheads, and further affects performance of performing neural network inference by the NPU.

## SUMMARY

This application provides an apparatus and a method for implementing data synchronization during neural network inference, to reduce overheads of performing data migration in a memory.

According to a first aspect, an embodiment of this application provides an apparatus for implementing data synchronization during neural network inference. The apparatus includes: a memory, configured to store a first feature map; and a neural-network processing unit NPU, configured to: obtain the first feature map from the memory, where the first feature map includes M blocks, and M is a positive integer; separately perform, in an asynchronous manner, inference computation at at least two layers of a neural network model on the M blocks to obtain M inference results, where the asynchronous manner means that data synchronization is not performed on an intermediate result obtained after inference computation at one layer of the neural network model is performed on each block, and inference computation at a next layer continues to be performed on the intermediate result; and perform data synchronization on the M inference results to obtain synchronized data. The first feature map may be an input image or another initial input, or may be a feature map generated in a neural network inference process. A block is a part of the first feature map.

It can be learned from the first aspect that the NPU performs data synchronization only after completing inference computation at the at least two layers of the neural network model, so that a quantity of data synchronization times in the neural network inference process is relatively small, and less data migration overheads are generated.

In a possible implementation, the first feature map is the input image. The apparatus further includes a digital image signal processor ISP that is configured to: perform image processing on an original image captured by a camera lens, and store an image processing result as the input image in the memory.

Correspondingly, when obtaining the first feature map from the memory, the NPU is specifically configured to obtain the input image from the memory.

In the foregoing implementation, because the original image includes relatively much noise data and unnecessary information, the ISP needs to perform image processing on the original image to obtain an input image suitable for neural network inference.

In a possible implementation, when performing image processing on the original image captured by the camera lens, and storing the image processing result as the input image in the memory, the ISP is specifically configured to: divide the original image into M original image blocks; sequentially perform image processing on the M original image blocks to obtain M image blocks; and asynchronously store the M image blocks as the M blocks in the memory. The M image blocks are the image processing result. It can be learned from the foregoing implementation that each time the ISP generates an image block, the ISP stores the generated image block in the memory. Therefore, the ISP does not perform data synchronization, namely, performs asynchronous processing, on the image block. This can reduce data migration overheads caused by data synchronization, and improve data processing efficiency.

In a possible implementation, when performing image processing on the original image captured by the camera lens, and storing the image processing result as the input image in the memory, the ISP is specifically configured to: perform image processing on the original image by block to obtain a plurality of image blocks; and perform data synchronization on the plurality of image blocks to obtain the image processing result, and store the image processing result in the memory.

It can be learned from the foregoing implementation that the ISP performs data synchronization, that is, synchronization processing, on the plurality of generated image blocks.

In a possible implementation, for the foregoing synchronization processing performed by the ISP, the NPU is further configured to divide the obtained first feature map into the M blocks.

In a possible implementation, the NPU includes a plurality of processor cores, the plurality of processor cores share one cache, and the NPU is further configured to store the synchronized data in one of the memory and the cache.

In a possible implementation, when storing the synchronized data in one of the memory and the cache, the NPU is specifically configured to: compare a size of the synchronized data with a size of the cache; and when the size of the synchronized data is greater than the size of the cache, store the synchronized data in the memory; or when the size of the synchronized data is not greater than the size of the cache, store the synchronized data in the cache.

It can be learned from the foregoing implementation that the synchronized data generated by the NPU may be stored in an L2 cache instead of the memory. This avoids a case in which all the synchronized data generated by the NPU is stored in the memory, and reduces overheads of performing data migration in the memory.

In a possible implementation, the NPU is further configured to: extract the synchronized data from the memory or the cache; and use the synchronized data as a second feature map to perform inference computation at one or more layers of the neural network model. The one or more layers of the neural network model are subsequent layers of the at least two layers of the neural network model.

In a possible implementation, the NPU is configured to separately perform, in the asynchronous manner, inference computation at one or more layers of the neural network model on a plurality of blocks included in the second feature map.

In a possible implementation, a value of M is different from a quantity of the plurality of blocks included in the second feature map.

In a possible implementation, data dependency exists between two adjacent blocks of the plurality of blocks included in the second feature map.

In a possible implementation, data dependency exists between two adjacent blocks of the M blocks.

According to a second aspect, an embodiment of this application provides an apparatus for implementing data synchronization during neural network inference. The apparatus includes a computing engine including at least one processor core, configured to: obtain a first feature map, where the first feature map includes M blocks, and M is a positive integer; separately perform, in an asynchronous manner, inference computation at at least two layers of a neural network model on the M blocks to obtain M inference results, where the asynchronous manner means that data synchronization is not performed on an intermediate result obtained after inference computation at one layer of the neural network model is performed on each block, and inference computation at a next layer continues to be performed on the intermediate result; and perform data synchronization on the M inference results to obtain synchronized data.

In a possible implementation, the apparatus further includes a cache, the at least one processor core shares the cache, and the computing engine is further configured to store the synchronized data in the cache.

In a possible implementation, the computing engine is specifically configured to store the synchronized data in the cache when a size of the synchronized data is not greater than a size of the cache.

In a possible implementation, the NPU is further configured to: extract the synchronized data from the cache; and use the synchronized data as a second feature map to perform inference computation at one or more layers of the neural network model. The one or more layers of the neural network model are subsequent layers of the at least two layers of the neural network model.

In a possible implementation, data dependency exists between two adjacent blocks of the M blocks.

According to a third aspect, an embodiment of this application provides a method for implementing data synchronization during neural network inference. The method includes: A neural-network processing unit NPU obtains a first feature map, where the first feature map includes M blocks, and M is a positive integer; the NPU separately performs, in an asynchronous manner, inference computation at at least two layers of a neural network model on the M blocks to obtain M inference results, where the asynchronous manner means that data synchronization is not performed on an intermediate result obtained after inference computation at one layer of the neural network model is performed on each block, and inference computation at a next layer continues to be performed on the intermediate result; and the NPU performs data synchronization on the M inference results to obtain synchronized data.

In a possible implementation, the first feature map is an input image, and before that an NPU obtains a first feature map, the method further includes: A digital signal processor ISP performs image processing on an original image captured by a camera lens, and stores an image processing result as the input image in a memory. The memory is an external memory of the NPU.

Correspondingly, that an NPU obtains a first feature map includes: The NPU obtains the input image from the memory.

In a possible implementation, that an ISP performs image processing on an original image captured by a camera lens, and stores an image processing result as the input image in a memory includes: The ISP divides the original image into M original image blocks; the ISP sequentially performs image processing on the M original image blocks to obtain M image blocks; and the ISP asynchronously stores the M image blocks as the M blocks in the memory. The M image blocks are the image processing result.

In a possible implementation, that an ISP performs image processing on an original image captured by a camera lens, and stores an image processing result as the input image in a memory includes: The ISP performs image processing on the original image by block to obtain a plurality of image blocks; and the ISP performs data synchronization on the plurality of image blocks to obtain the image processing result, and stores the image processing result in the memory.

In a possible implementation, the NPU includes a plurality of processor cores, the plurality of processor cores share one cache, and the method further includes: The NPU stores the synchronized data in one of the memory and the cache. The memory is the external memory of the NPU.

In a possible implementation, the method further includes: The NPU extracts the synchronized data from the memory or the cache; and the NPU uses the synchronized data as a second feature map to perform inference computation at one or more layers of the neural network model. The one or more layers of the neural network model are subsequent layers of the at least two layers of the neural network model.

It should be noted that the method for implementing data synchronization according to the third aspect may be considered as a method performed by the apparatus for implementing data synchronization according to the first aspect. For a specific implementation and a corresponding technical effect of the method according to the third aspect, refer to related descriptions in the first aspect. Details are not described herein again.

According to a fourth aspect, an embodiment of this application provides an apparatus for implementing data synchronization during neural network inference. The apparatus includes modules configured to perform the method according to the third aspect.

According to a fifth aspect, a computer-readable medium is provided. The computer-readable medium stores program code used by a device for execution, and the program code includes instructions used to perform the method according to the third aspect.

According to a sixth aspect, a computer program product including instructions is provided. When the computer program product is run on a computer, the computer is enabled to perform the method according to the third aspect.

According to a seventh aspect, a chip is provided. The chip includes a processor and a data interface. The processor reads instructions through the data interface to perform the method according to the third aspect.

## BRIEF DESCRIPTION OF DRAWINGS

FIG. 1 is a diagram of an architecture in which neural network inference is performed on image data;
FIG. 2 is a schematic diagram of a structure of a convolutional neural network CNN according to an embodiment of this application;
FIG. 3 is an architectural diagram of a system for implementing data synchronization during neural network inference according to an embodiment of this application;
FIG. 4 is a flowchart of implementing data synchronization during neural network inference according to an embodiment of this application;
FIG. 5 is a data dependency diagram of adjacent blocks according to an embodiment of this application;
FIG. 6 is a schematic block diagram of a processor core according to an embodiment of this application;
FIG. 7 is a flowchart of implementing data synchronization during neural network inference according to an embodiment of this application; and
FIG. 8 is a diagram of a structure of an apparatus for implementing data synchronization during neural network inference according to an embodiment of this application.

## DESCRIPTION OF EMBODIMENTS

The following describes technical solutions of this application with reference to the accompanying drawings.

Because the embodiments of this application relate to massive application of a neural network, for ease of understanding, the following first describes related terms and related concepts such as a neural network in the embodiments of this application.

(1) Neural network

The neural network may include a neuron. The neuron may be an operation unit that uses $x_s$ and an intercept of 1 as input. Output of the operation unit may be as follows:

$$h_{W,b}(x) = f(W^T x) = f\left(\sum_{s=1}^{n} W_s x_s + b\right)$$

Herein, s = 1, 2, ..., or n, n is a natural number greater than 1, $W_s$ indicates a weight of $x_s$, b indicates a bias of the neuron, f indicates an activation function (activation function) of the neuron, where the activation function is used for introducing a non-linear characteristic into the neural network, to convert an input signal in the neuron into an output signal. The output signal of the activation function may serve as input of a next convolution layer. The activation function may be a sigmoid function. The neural network is a network formed by joining many single neurons together. To be specific, output of a neuron may be input of another neuron. Input of each neuron may be connected to a local receptive field of a previous layer to extract a feature of the local receptive field. The local receptive field may be a region including several neurons.

(2) Deep neural network

The deep neural network (Deep Neural Network, DNN), also referred to as a multi-layer neural network, may be understood as a neural network having many hidden layers. The "many" herein does not have a special measurement standard. Based on locations of different layers in the DNN, a neural network in the DNN may be divided into three types: an input layer, a hidden layer, and an output layer. Generally, a first layer is the input layer, a last layer is the output layer, and a middle layer is the hidden layer. Layers are fully connected. To be specific, any neuron at an $i^{th}$ layer is necessarily connected to any neuron at an $(i + 1)^{th}$ layer. Although the DNN seems to be complex, the DNN is actually not complex in terms of work at each layer, and is simply expressed as the following linear relationship expression: $\vec{y} = \alpha(W\vec{x} + \vec{b})$, where $\vec{x}$ is an input vector, $\vec{y}$ is an output vector, $\vec{b}$ is a bias vector, W is a weight matrix (also referred to as a coefficient), and $\alpha()$ is an activation function. Each layer simply performs such a simple operation on the input vector $\vec{x}$ to obtain the output vector $\vec{y}$. Because the DNN includes a large quantity of layers, there are a large quantity of coefficients W and a large quantity of offset vectors $\vec{b}$. These parameters are defined in the DNN as follows: The coefficient W is used as an example. It is assumed that in a three-layer DNN, a linear coefficient from a fourth neuron at a second layer to a second neuron at a third layer is defined as $W_{24}^3$. A superscript 3 represents a number of a layer at which the coefficient W is located, and a subscript corresponds to an index 2 of the third layer for output and an index 4 of the second layer for input. In conclusion, a coefficient from a $k^{th}$ neuron at an $(L-1)^{th}$ layer to a $j^{th}$ neuron at an $L^{th}$ layer is defined as $W_{jk}^L$. It should be noted that the input layer has no parameter W. In the deep neural network, more hidden layers allow the network to better describe a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of a trained deep neural network (a weight matrix formed by vectors W at many layers).

(3) Convolutional neural network

The convolutional neural network (CNN, Convolutional Neuron Network) is a deep neural network having a convolutional structure. The convolutional neural network includes a feature extractor consisting of a convolutional layer and a sub sampling layer. The feature extractor may be considered as a filter. A convolution process may be considered as performing convolution by using a trainable filter and an input image or a feature map (feature map). The convolutional layer is a neuron layer, in a convolutional neural network, that performs convolution processing on an input signal. At the convolutional layer of the convolutional neural network, one neuron may be connected to only a part of neurons at a neighboring layer. A convolutional layer usually includes several feature planes, and each feature plane may include some neurons arranged in a rectangle. Neurons of a same feature plane share a weight, and the shared weight herein is a convolution kernel. Sharing a weight may be understood as that a manner of extracting image information is unrelated to a position. The principles implied herein are that statistical information of a part of an image is the same as that of another part. To be specific, image information that is learned in a part can also be used in another part. Therefore, same learned image information can be used for all locations in the image. At a same convolutional layer, a plurality of convolution kernels may be used to extract different image information. Usually, a larger quantity of convolution kernels indicates richer image information reflected by a convolution operation.

The convolution kernel may be initialized in a form of a matrix of a random size. In a training process of the convolutional neural network, an appropriate weight may be obtained for the convolution kernel through learning. In addition, sharing the weight is advantageous because connections between layers of the convolutional neural network are reduced, and a risk of overfitting is reduced.

(4) Recurrent neural network (RNN, Recurrent Neural Network)

The RNN is used to process sequence data. In a conventional neural network model, from an input layer to a hidden layer and then to an output layer, the layers are fully connected, but nodes at each layer are not connected. Such a common neural network resolves many problems, but is still incapable of resolving many other problems. For example, to predict a next word in a sentence, a previous word usually needs to be used, because adjacent words in the sentence are not independent. A reason why the RNN is referred to as a recurrent neural network is that current output of a sequence is related to previous output. A specific representation form is that the network memorizes previous information and applies the previous information to calculation of the current output. To be specific, nodes at the hidden layer are no longer unconnected, but are connected, and input of the hidden layer includes not only output of the input layer but also output of the hidden layer at a previous moment. Theoretically, the RNN can process sequence data of any length. Training of the RNN is the same as training of a conventional CNN or DNN. An error back propagation algorithm is used, but there is a difference: If the RNN is expanded, a parameter such as W of the RNN is shared, and this is different from that in the conventional neural network described above by using an example. In addition, during use of a gradient descent algorithm, output in each step depends not only on a network in the current step, but also on a network status in several previous steps. The learning algorithm is referred to as a backpropagation through time Backpropagation Through Time (BPTT) algorithm.

(5) Loss function

In a process of training the deep neural network, because it is expected that output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network becomes a process of reducing the loss as much as possible.

A neural network according to embodiments of this application may be a convolutional neural network CNN. As described in the foregoing basic concepts, the convolutional neural network is a deep neural network having a convolutional structure, and is a deep learning (deep learning) architecture. In the deep learning architecture, multilayer learning is performed at different abstract levels according to a machine learning algorithm. As a deep learning architecture, the CNN is a feed-forward (feed-forward) artificial neural network, and each neuron in the feed-forward artificial neural network can respond to an image input into the feed-forward artificial neural network.

As shown in FIG. 2, a CNN 200 may include an input layer 210, convolution layers/pooling layers 220 (where the pooling layers are optional), and a neural network layer 230.

Convolutional layer/Pooling layer 220:

Convolutional layer:

As shown in FIG. 2, the convolutional layers/pooling layers 220 may include, for example, layers 221 to 226. For example, in an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layers 221 and 222 are convolutional layers, the 223 layer is a pooling layer, the layers 224 and 225 are convolutional layers, and the layer 226 is a pooling layer. In other words, output of a convolutional layer may be used as input for a subsequent pooling layer, or may be used as input for another convolutional layer, to continue to perform a convolution operation.

Pooling layer:

Because a quantity of training parameters usually needs to be reduced, pooling layers usually need to be periodically introduced after the convolution layers. For the layers 221 to 226 of the convolution layers/pooling layers 220 in FIG. 2, there may be one pooling layer following one convolution layer, or one or more pooling layers following a plurality of convolution layers. During image processing, the pooling layer is used for reducing a space size of the image. The pooling layer may include an average pooling operator and/or a maximum pooling operator, to perform sampling on the input image to obtain an image with a relatively small size. The average pooling operator may be used for calculating pixel values in the image in a specific range, to generate an average value. The average value is used as an average pooling result. The maximum pooling operator may be used for selecting a pixel with a largest value in a specific range as a maximum pooling result. In addition, similar to that the size of the weight matrix at the convolutional layer needs to be related to the size of the image, an operator at the pooling layer also needs to be related to the size of the image. A size of a processed image output from the pooling layer may be less than a size of an image input to the pooling layer. Each pixel in the image output from the pooling layer indicates an average value or a maximum value of a corresponding sub-region of the image input to the pooling layer.

Neural network layer 230:

After processing is performed by the convolutional layer/pooling layer 220, the convolutional neural network 200 still cannot output required output information. As described above, at the convolutional layer/pooling layer 220, only a feature is extracted, and parameters resulting from an input image are reduced. However, to generate final output information (required class information or other related information), the convolutional neural network 200 needs to use the neural network layer 230 to generate output of one required class or outputs of a quantity of a group of required classes. Therefore, the neural network layer 230 may include a plurality of hidden layers (hidden layers 231, 232, ..., and 23n shown in FIG. 2) and an output layer 240. Parameters included in the plurality of hidden layers may be obtained through pre-training based on related training data of a specific task type. For example, the task type may include image recognition, image classification, and super-resolution image reconstruction.

The layer after the plurality of hidden layers in the neural network layer 230, namely, the last layer of the entire convolutional neural network 200 is the output layer 240. The output layer 240 has a loss function similar to classification cross entropy, and is specifically configured to calculate a predicted error. Once forward propagation (propagation in a direction from the input layer 210 to the output layer 240 shown in FIG. 2 is the forward propagation) of the entire convolutional neural network 200 is complete, back propagation (propagation in a direction from the output layer 240 to the input layer 210 shown in FIG. 2 is the back propagation) starts to update a weight value and a bias of each layer mentioned above, to reduce a loss of the convolutional neural network 200, and reduce an error between an ideal result and a result output by the convolutional neural network 200 by using the output layer.

It should be noted that the convolutional neural network 200 shown in FIG. 2 is merely used as an example of a convolutional neural network. During specific application, the convolutional neural network may alternatively exist in a form of another network model.

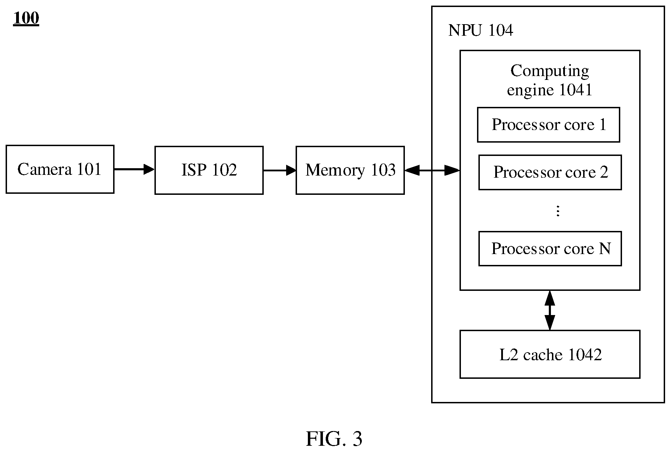

A main idea of this application is that an NPU separately performs inference computation at at least two layers in a neural network model on a plurality of blocks in a feature map in an asynchronous manner, and then performs data synchronization on a plurality of inference results, to resolve a problem of selecting a time point at which the NPU performs data synchronization in a neural network model inference process. The following describes a specific scenario in which neural network inference is performed on an image with reference to FIG. 3. It should be noted that, performing inference computation of the neural network model by the NPU in this application is not limited to an image scenario, but all scenarios in which the neural network model can be used for inference computation can be applied to this application.

The following describes, with reference to an image processing scenario, a system architecture according to an embodiment of this application.

Refer to FIG. 3, and an embodiment of the present invention provides a system architecture 100. The system architecture 100 includes a camera 101, an ISP 102, a memory 103, and an NPU 104. The NPU 104 includes a computing engine 1041 and a level 2 cache (L2 cache) 1042. The L2 cache 1042 is a cache shared by a plurality of processor cores included in the computing engine 1041. A size of the L2 cache is usually far less than a size of the memory 103.

The camera 101 (or referred to as a camera lens) captures an original image, and sends the captured original image to the ISP for image processing.

Specifically, the camera 101 may sequentially send the original image to the ISP 102 in a row/column manner. For example, the camera 101 captures an original image whose size is $720 \times 1280$ p, and sends an original image block whose size is $20 \times 1280$ p each time in a row/column manner, so that 36 original image blocks are sent in total, to complete sending of the original image.

After receiving the original image, the ISP 102 performs image processing on the original image, and then stores an image processing result in the memory 103. The NPU uses the image processing result as an input image to perform inference computation of a neural network model. The input image may also be understood as a feature map (feature map).

Specifically, the ISP may perform processing in the following two manners.

(1) After receiving the original image, the ISP divides the original image into $M_1$ original image blocks; sequentially performs image processing on the $M_1$ original image blocks to obtain corresponding $M_1$ image blocks, where the $M_1$ image blocks form an image processing result; and then asynchronously stores the $M_1$ image blocks in the memory 103. This means that each time the ISP generates an image block, the ISP stores the generated image block in the memory 103, that is, the ISP does not need to perform a data synchronization process on the $M_1$ image blocks. In this case, the $M_1$ image blocks may be distributed in different storage areas of the memory 103, or may be distributed in continuous storage areas of the memory 103.

The NPU sequentially obtains the $M_1$ image blocks, namely, the image processing result, from the memory, and uses the $M_1$ image blocks as the input image to perform inference computation. In addition, each image block may be considered as a block of the input image, and therefore, the input image includes $M_1$ blocks. That is, a quantity of original image blocks obtained by dividing the original image in the ISP is the same as a quantity of blocks included in the input image on which the NPU performs inference computation, and is $M_1$.

(2) After receiving the original image, the ISP performs image processing on the original image by block to obtain a plurality of image blocks, performs data synchronization on the plurality of image blocks, and then stores synchronized data in the memory 103. In this case, the plurality of image blocks are distributed in continuous storage areas of the memory 103. In this case, the ISP performs data synchronization on the plurality of image blocks to obtain an image processing result, and stores the image processing result in the memory 103. Then, the NPU obtains the image processing result from the memory 103 and uses the image processing result as an input image. When performing inference computation, the NPU divides the input image into $M_1$ blocks. In this case, a quantity of blocks obtained by dividing the original image in the ISP is unrelated to a quantity M1 of blocks obtained by dividing the input image on which the NPU performs inference computation. In other words, the quantity of blocks obtained by dividing the original image may be equal to or may be not equal to the quantity of blocks obtained by dividing the input image on which the NPU performs inference computation.

It can be learned from the foregoing that in the foregoing two manners, the input image on which the NPU performs inference computation includes the $M_1$ blocks.

The NPU 104 obtains the input image from the memory 103, where the input image includes $M_1$ blocks; separately performs inference computation at all layers in stage 1 (stage 1) on the $M_1$ blocks to obtain corresponding $M_1$ inference results; and then performs data synchronization on the $M_1$ inference results to obtain synchronized data in stage 1. Inference computation in stage 1 includes inference computation at one or more layers of the neural network model, and inference computation in stage 1 is performed on each block to obtain a corresponding inference result.

It should be noted that the synchronized data in stage 1 is a feature map, and inference computation in stage 2 is subsequently performed on the feature map. Certainly, each inference result may be actually understood as the feature map or a part of the feature map.

After obtaining the synchronized data in stage 1, the NPU 104 compares a size of the synchronized data in stage 1 with a size of the L2 cache. If the size of the synchronized data in stage 1 is greater than the size of the L2 cache, the NPU 104 stores the synchronized data in stage 1 in the memory 103. If the size of the synchronized data in stage 1 is not greater than the size of the L2 cache, the NPU 104 stores the synchronized data in stage 1 in the L2 cache. When the synchronized data in stage 1 is stored in the L2 cache, overheads of performing data migration in the memory may be reduced.

The NPU 104 extracts, from the memory 103 or the L2 cache, the synchronized data in stage 1, and uses the synchronized data in stage 1 as the feature map to perform inference computation at all layers in stage 2 (stage 2). This is the same as an inference computation manner in stage 1. In an inference computation process in stage 2, inference computation is also performed on the feature map in a block manner. Specifically, the feature map is divided into $M_2$ blocks, inference computation in stage 2 is separately performed on the $M_2$ blocks to obtain corresponding $M_2$ inference results, and then data synchronization is performed on the $M_2$ inference results to obtain synchronized data in stage 2. Similarly, inference computation in stage 2 also includes inference computation at one or more layers of the neural network model.

After obtaining the synchronized data in stage 2, the NPU 104 also compares a size of the data with the size of the L2 cache, to determine to store the synchronized data in stage 2 in the memory 103 or the L2 cache. For details, refer to the foregoing storage manner of the synchronized data in stage 1, and details are not described herein again.

By analogy, the NPU 104 performs inference computation in each subsequent stage in an inference computation manner that is the same as that of stage 1 and that of stage 2, to complete inference computation in stage N (stage N), that is, complete inference computation at all layers in the neural network model. Output of inference computation in stage N is semantic information such as an image recognition result.

It should be noted that, inference computation in each of the foregoing N stages includes inference computation at one or more layers of the neural network model, and a quantity of neural network layers at which inference computation is performed and that are included in each stage may be the same as or different from a quantity of neural network layers at which inference computation is performed and that are included in another stage.

The memory 103 is an external memory of the NPU 104. The memory 103 may be a double data rate synchronous dynamic random access memory (Double Data Rate Synchronous Dynamic Random Access Memory, DDR SDRAM), a high bandwidth memory (High Bandwidth Memory, HBM), or another readable and writable memory.

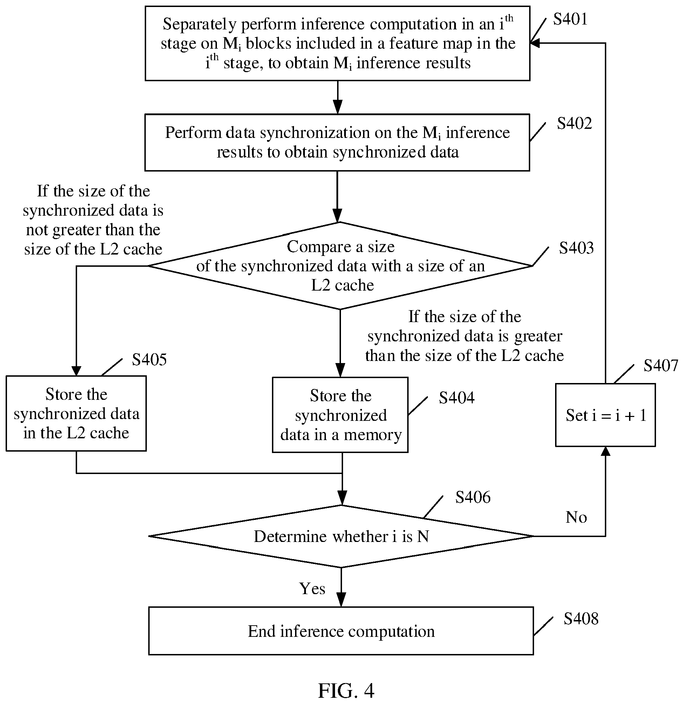

To describe a process in which the NPU 104 performs inference computation in the N stages more clearly, FIG. 4 is a procedure for implementing data synchronization during neural network inference according to an embodiment of this application. The procedure is performed by the NPU. Specifically, the procedure includes the following steps.

S401: Separately perform inference computation in an $i^{th}$ stage on $M_i$ blocks included in a feature map in the $i^{th}$ stage, to obtain $M_i$ inference results, where $1 \leq i \leq N$, and an initial value of i is 1, that is, inference computation is performed from stage 1 to stage N.

S402: Perform data synchronization on the $M_i$ inference results to obtain synchronized data.

S403: Compare a size of the synchronized data with a size of an L2 cache. If the size of the synchronized data is greater than the size of the L2 cache, perform S404. If the size of the synchronized data is not greater than the size of the L2 cache, perform S405.

S404: Store the synchronized data in a memory.

S405: Store the synchronized data in the L2 cache.

S406: Determine whether i is equal to N. If i is not equal to N, that is, i is less than N, perform S407. If i is equal to N, perform S408.

S407: Set i = i + 1, and go to S401.

S408: End inference computation.

It should be noted that a sequence of performing the foregoing steps may be appropriately adjusted provided that implementation of the solution is not affected. This is not limited in this application.

It can be learned from the foregoing that the NPU performs data synchronization only after completing inference computation in each stage, that is, performs data synchronization based on an inference result in a stage. Generally, inference computation in each stage includes inference computation at a plurality of layers of the neural network model, that is, the NPU performs data synchronization only after completing inference at the plurality of layers of the neural network model. Therefore, a quantity of data synchronization times in a neural network inference process is relatively small. In this case, less data migration overheads are generated. Therefore, performance of performing neural network inference by the NPU is relatively high.

The following specifically describes an inference computation process in each stage, and an $i^{th}$ stage in the N stages is used as an example for description.

Inference computation in the $i^{th}$ stage may include inference computation at one or more layers of the neural network model. If inference computation in the $i^{th}$ stage includes inference computation at one layer of the neural network model, neural network inference computation at one layer is performed on a feature map obtained in the $i^{th}$ stage. Specifically, neural network inference computation at one layer is performed sequentially on $M_i$ blocks included in the feature map obtained in the $i^{th}$ stage, to obtain $M_i$ inference results, and then data synchronization is performed on the $M_i$ inference results, to obtain synchronized data in the $i^{th}$ stage.

If inference computation in the $i^{th}$ stage includes inference computation at a plurality of layers of the neural network model, neural network inference computation at the plurality of layers is performed on a feature map obtained in the $i^{th}$ stage. Specifically, inference computation in the $i^{th}$ stage is performed sequentially on $M_i$ blocks included in the feature map obtained in the $i^{th}$ stage, that is, after neural network inference at all layers in the $i^{th}$ stage is performed on one block, neural network inference at all layers in the $i^{th}$ stage is performed on a next block adjacent to the block, until neural network computation at all layers in the $i^{th}$ stage is performed on all the $M_i$ blocks included in the feature map, to obtain $M_i$ inference results, and then data synchronization is performed

on the $M_i$ inference results, to obtain synchronized data in the $i^{th}$ stage.

Further, inference computation at all layers in the $i^{th}$ stage is performed on each block in the feature map in an asynchronous manner. The asynchronous manner means that data synchronization is not performed on an intermediate result obtained after inference computation at one layer of the neural network model is performed on each block, and inference computation at a next layer continues to be performed on the intermediate result until inference computation at all layers included in the $i^{th}$ stage is completed. An intermediate result generated by each block at each layer may be stored in the L2 cache, and then the intermediate result is extracted from the L2 cache to undergo inference computation at a next layer. The intermediate result is not stored in the memory, but in the L2 cache, to avoid performing data migration in the memory.

For specific implementation of the foregoing inference computation process in the $i^{th}$ stage, the following points need to be noted:

(1) There is data dependency. In a process of performing inference computation in the $i^{th}$ stage, a feature map is divided into $M_i$ blocks, and then inference computation at each layer included in the $i^{th}$ stage is sequentially completed by block. Data dependency exists between two adjacent blocks, that is, overlapping data exists.

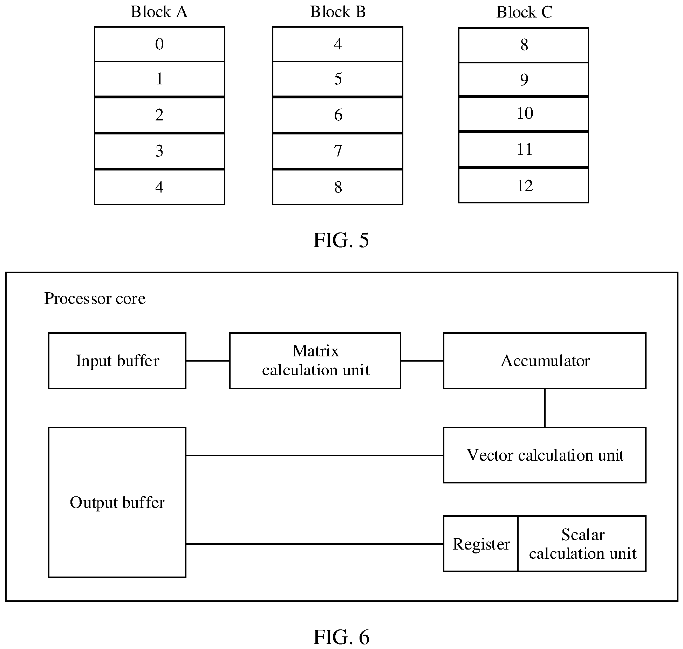

For example, FIG. 5 shows three adjacent blocks A, B, and C. The block A includes data from row 0 to row 4, the block B includes data from row 4 to row 8, and the block C includes data from row 8 to row 12. An edge part of the block A, namely, the data in row 4, is in the block B. Therefore, data dependency exists between the block A and the block B, and the data in row 4 is overlapping data. An edge part of the block B, namely, the data in row 8, is in the block C. Therefore, data dependency exists between the block B and the block C, and the data in row 8 is overlapping data.

(2) A size of the L2 cache is usually relatively small. During inference computation in a stage, a size of a feature map obtained in the stage is fixed. If a quantity M of blocks included in the feature map is relatively large, that is, the feature map includes a relatively large quantity of blocks, a size of each block is relatively small. Correspondingly, an intermediate result that is obtained by performing inference at each layer on each block is relatively small, and the intermediate result may be stored in the L2 cache. If M is relatively small, that is, the feature map includes a relatively small quantity of blocks, a size of each block is relatively large. Correspondingly, an intermediate result that is obtained by performing inference at each layer on each block is relatively large, and the intermediate result cannot be stored in the L2 cache. Therefore, to ensure that an intermediate result that is obtained by performing inference at each layer on each block in the feature map obtained in this stage can be stored in the L2 cache, an appropriate value needs to be selected for the block quantity M.

(3) In different stages, sizes of obtained feature maps are different. Therefore, to ensure that in each stage, an intermediate result generated by performing inference at each layer on each block can be stored in the L2 cache, an appropriate value needs to be set for a quantity M of blocks obtained by dividing the feature map in each stage. In addition, values of M may be the same or different in different stages. How to determine a value of M in each stage is further described below.

It can be learned from the foregoing that when the NPU performs the foregoing inference computation, the L2 cache can store two types of data:

(1) synchronized data in a stage, where a size of the synchronized data is not greater than that of the L2 cache; and as a quantity of layers of a neural network increases, a size of synchronized data generated in a later stage is smaller; therefore, synchronized data generated after inference computation in several stages may be stored in the L2 cache; and
(2) in a process of performing inference computation in a stage, an intermediate result generated by performing inference at each layer on a block obtained by dividing an obtained feature map.

In an entire inference computation process performed by the NPU, the L2 cache may store the foregoing two types of data, so that storage load of the memory is reduced, and overheads of performing data migration in the memory are reduced.

For a specific neural network model, a quantity of neural network layers included in the neural network model is fixed. It is assumed that the quantity of neural network layers is classified into N stages, namely, N inference stages. Only synchronized data in each stage may be stored in the memory, and an intermediate result generated in each inference stage is not stored in the memory. Therefore, a smaller value of N indicates less synchronized data generated in an entire inference computation process, that is, a smaller quantity of data synchronization times causes less data migration overheads. However, because a smaller value of N indicates a larger quantity of layers of the neural network model in each stage, data dependency between M blocks in a feature map obtained in each stage increases, or even increases exponentially, to increase a calculation amount of neural network inference computation in each stage. Therefore, a smaller value of N is not preferred. An appropriate value of N needs to be determined to achieve a balance between data migration overheads and a calculation amount.

It can be learned from the foregoing that values of M and N affect inference performance of the entire neural network model. Therefore, how to determine a value of N and a value of a quantity M of blocks obtained by dividing the feature map in each stage is important.

For a determined neural network model, to obtain a value of M (namely, N values from $M_1$ to $M_N$) and a value of N that are suitable for the neural network model, this application proposes to establish a cost function J about time. The cost function J is used to indicate a sum of time for the ISP to perform image processing and time for the NPU to perform inference computation on the entire neural network model, namely, total end-to-end time, which may alternatively be referred to as a total end-to-end delay.

Specifically, $J = T1(M_1) + T2(M_i, N, L_i) + T3(M_i, N, L_i)$.

Herein, $T1(M_1)$ is used to indicate time for the ISP to perform image processing on one original image block, $T1(M_1)$ is affected by a quantity $M_1$ of original image blocks obtained by dividing an original image, and $M_1$ is also a quantity of blocks included in a feature map (namely, an input image) obtained in stage 1.

$$T1(M_1) = \frac{1}{M_1} * \tau$$

For example, , where $\tau$ indicates time for the ISP to process the entire original image, and the time may be determined through calculation or based on time of an ISP pipeline.

$T2(M_i, N, L_i)$ is used to indicate a sum of time spent by the NPU in performing inference computation at N stages from stage 1 (Stage 1) to stage N (Stage N). Inference computation time in an $i^{th}$ stage is a sum of time in which computation at all layers of the neural network model in this stage is performed on all blocks of a feature map obtained in the $i^{th}$ stage, and $1 \leq i \leq N$. $T2(M_i, N, L_i)$ is affected by $M_i$, N, and $L_i$. $M_i$ is used to indicate a quantity of blocks obtained by dividing the feature map obtained in the $i^{th}$ stage. $L_i$ is used to indicate a number of a first-layer neural network in the $i^{th}$ stage in the entire neural network model. For example, if $L_2 = 3$ and $L_3 = 6$, it indicates that the first-layer neural network in stage 2 is at a third layer in the entire neural network model. This means that stage 1 includes two layers of a neural network, namely, first two layers of the entire neural network model; and it also indicates that the first-layer neural network in stage 3 is located at a sixth layer in the entire neural network model. This means that stage 1 and stage 2 include five layers of a neural network in total. Because stage 1 includes two layers of the neural network, stage 2 includes four layers of the neural network. Therefore, a quantity of neural network layers included in each of the N stages, namely, a distribution status of the quantity of neural network layers in the N stages, may be determined based on N and $L_i$.

$$T2 = \frac{\sum_{i=1}^{N} \sum_{l=l_1}^{l(i+1)} \sum_{m=1}^{Mi} Cycles(l,m,i)}{P}$$

For example, , where P indicates power of the NPU, and $Cycles(l, m, i)$ indicates a quantity of theoretical cycles (cycle) required for performing a convolution operation on an $m^{th}$ block of the feature map obtained in the $i^{th}$ stage at the

$L^{th}$ layer of the entire neural network model. Further, $Cycles(l, m, i)$ is determined based on a batch size (batch size), a size of the $m^{th}$ block, a size of a convolution kernel, a quantity of computing units on the NPU, and the like. A specific manner of calculating $Cycles(l, m, i)$ is not further described in this application.

$T3(M_i, N, L_i)$ is used to indicate time generated when the NPU performs data migration in a storage device in an inference computation process from stage 1 (Stage 1) to stage N (Stage N), and $T3(M_i, N, L_i)$ is also affected by $M_i$, N, and $L_i$. Further, T3 is determined based on a batch size (batch size), a size of an $m^{th}$ block, a size of a convolution kernel, a quantity of computing units on the NPU, and the like. A manner of calculating T3 is not further described in this application.

The cost function J about time is a nonlinear function. The function J includes a plurality of unknown variables, such as N, $M_i$, and $L_i$. These unknown variables are set to meet a specific constraint condition, for example, $1 \leq i \leq N$, $1 \leq N \leq$ total downsampling times in a neural network model, and a value of $M_i$ ensures that a size of an intermediate result obtained by performing inference at each layer on each block is less than or equal to the size of the L2 cache. Therefore, values of a group of variables (N, $M_i$, and $L_i$) that meet the constraint condition is resolved, so that a value of the target function J is the smallest, that is, an end-to-end delay is the smallest. In this case, the obtained values of the group of variables (N, $M_i$, and $L_i$) are a group of values that can ensure optimal inference performance of the entire neural network model.

Therefore, for a determined neural network model, a group of appropriate values of the variables (N, $M_i$, and $L_i$) are calculated based on the foregoing nonlinear function J, to be specific, stages obtained by dividing the neural network model, a quantity of blocks obtained by dividing the feature map that is obtained in each stage, and layers of the neural network model included in each stage are determined. Then, the ISP and the NPU separately perform ISP processing and an entire neural network inference process based on the group of values.

For example, when it is determined that $M_1 = 10$, when the ISP performs processing in an asynchronous manner, the ISP divides an original image into 10 image blocks, and a feature map obtained by the NPU in stage 1 also includes 10 blocks; or when the ISP performs processing in a synchronous manner, a quantity of image blocks obtained by the ISP by dividing an original image is not limited by 10, and the NPU divides a feature map obtained in stage 1 into 10 blocks. When it is determined that $M_2 = 15$, the NPU divides a feature map obtained in stage 2 into 15 blocks.

It can be learned from FIG. 3 that the NPU 104 includes the computing engine 1041 and the L2 cache 1042. The computing engine 1041 may include one or more processor cores (FIG. 3 shows a plurality of processor cores as an example). The computing engine 1041 is configured to perform inference computation of a neural network model. A core of inference computation of the neural network model is implemented by a processor core. The processor core is responsible for performing calculation related to a scalar, a vector, and a tensor. The processor core may also be referred to as an AI processor core, AI core for short.

FIG. 6 is an example of an implementation architecture of a processor core. The processor core includes a matrix calculation unit, a vector calculation unit, a scalar calculation unit, and an accumulator. The matrix calculation unit and the accumulator mainly complete a matrix-related operation. The vector calculation unit is responsible for performing a vector operation, such as vector multiplication, vector addition, an exponential operation, and a logarithmic operation. The scalar calculation unit is mainly responsible for various types of scalar data operations and program procedure control.

Further, to cooperate with data transmission and migration in the processor core, a series of on-chip buffers and registers, such as an input buffer and an output buffer, are further disposed in the processor core in a distributed manner, and registers, such as a general-purpose register and a dedicated register, are configured around the scalar calculation unit.

An embodiment of this application provides a method for implementing data synchronization during neural network inference. The method specifically includes:

> S701: An NPU obtains a first feature map, where the first feature map includes M blocks, and M is a positive integer.
> S702: The NPU separately performs inference computation at at least two layers of a neural network model on the M blocks in an asynchronous manner, to obtain M inference results.

The asynchronous manner means that data synchronization is not performed on an intermediate result obtained after inference computation at one layer of the neural network model is performed on each block, and inference computation at a next layer continues to be performed on the intermediate result.

S703: The NPU performs data synchronization on the M inference results to obtain synchronized data.

Further, when the first feature map is an input image, the method further includes:

S700: A digital signal processor ISP performs image processing on an original image captured by a camera lens, and stores an image processing result as the input image in a memory, where the memory is an external memory of the NPU.

Specifically, the ISP may perform image processing on the original image in the following two manners:

> (1) The ISP divides the original image into M original image blocks; the ISP sequentially performs image processing on the M original image blocks to obtain M image blocks; and the ISP asynchronously stores the M image blocks as the M blocks in the memory. The M image blocks are the image processing result. (2) The ISP performs image processing on the original image by block to obtain a plurality of image blocks; and the ISP performs data synchronization on the plurality of image blocks to obtain the image processing result, and stores the image processing result in the memory.

Correspondingly, that an NPU obtains a first feature map in S701 includes: The NPU obtains the input image from the memory.

Further, the NPU includes a plurality of processor cores, the plurality of processor cores share one cache, and the method further includes:

S704: The NPU stores the synchronized data in one of the memory and the cache, where the memory is the external memory of the NPU.

Further, the foregoing method further includes:

> S705: The NPU extracts the synchronized data from the memory or the cache.
> S706: The NPU uses the synchronized data as a second feature map to perform inference computation at one or more layers of the neural network model. The one or more layers of the neural network model are subsequent layers of the at least two layers of the neural network model.

Specifically, the NPU separately performs, in the asynchronous manner, inference computation at one or more layers of the neural network model on a plurality of blocks included in the second feature map.

A value of M is different from a quantity of the plurality of blocks included in the second feature map. Data dependency exists between two adjacent blocks in the plurality of blocks included in the second feature map. Data dependency exists between two adjacent blocks in the M blocks.

It should be noted that, for specific implementation of the foregoing method for implementing data synchronization, refer to related implementation of the foregoing apparatus embodiment. For ease of description, the method for implementing data synchronization is not further described.

An embodiment of this application further provides an apparatus for implementing data synchronization during neural network inference, specifically including:

> an obtaining module 801, configured to obtain a first feature map, where the first feature map includes M blocks, and M is a positive integer; an inference module 802, configured to separately perform, in an asynchronous manner, inference computation at at least two layers of a neural network model on the M blocks to obtain M inference results, where the asynchronous manner means that data synchronization is not performed on an intermediate result obtained after inference computation at one layer of the neural network model is performed on each block, and inference computation at a next layer continues to be performed on the intermediate result; and
a synchronization module 803, configured to perform data synchronization on the M inference results to obtain synchronized data.

Further, when the first feature map is an input image, the apparatus for implementing data synchronization further includes:
an image processing module 800, configured to perform image processing on an original image captured by a camera lens, and use an image processing result as the input image.

Further, the inference module 802 is further configured to:
use the synchronized data as a second feature map to perform inference computation at one or more layers of the neural network model, where the one or more layers of the neural network model are subsequent layers of the at least two layers of the neural network model. Specifically, the inference module separately performs, in the asynchronous manner, inference computation at one or more layers of the neural network model on a plurality of blocks included in the second feature map.

It should be noted that, for specific implementation of the foregoing apparatus for implementing data synchronization, refer to related implementation of the foregoing apparatus embodiment. For ease of description, the apparatus for implementing data synchronization is not further described.

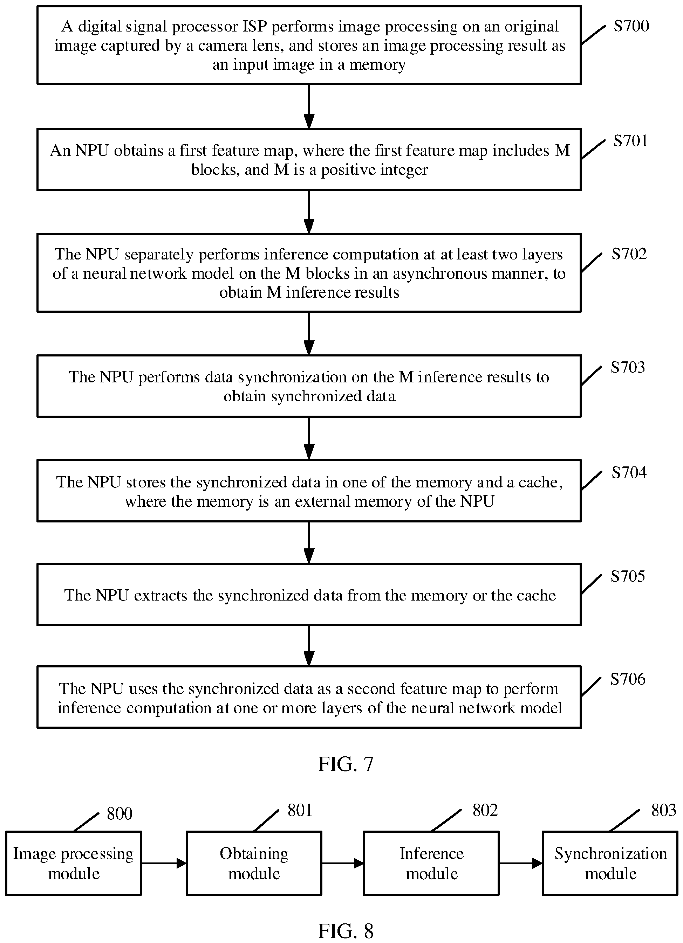

It should be noted that the foregoing schematic diagrams of apparatuses, such as FIG. 3, FIG. 6, and FIG. 8, are merely schematic diagrams of structures according to embodiments of the present invention, and position relationships between devices, components, modules, and the like shown in the figures do not constitute any limitation.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one location, or may be distributed on a plurality of network units. Some or all of the units may be selected based on actual requirements to achieve the objective of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes various media that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An apparatus for implementing data synchronization during neural network inference, comprising:

   a memory, configured to store a first feature map; and
   a neural-network processing unit NPU, configured to:

obtain the first feature map from the memory, wherein the first feature map comprises M blocks, and M is a positive integer;

separately perform, in an asynchronous manner, inference computation at at least two layers of a neural network model on the M blocks to obtain M inference results, wherein the asynchronous manner means that data synchronization is not performed on an intermediate result obtained after inference computation at one layer of the neural network model is performed on each block, and inference computation at a next layer continues to be performed on the intermediate result; and

perform data synchronization on the M inference results to obtain synchronized data.

2. The apparatus according to claim 1, wherein the first feature map is an input image, and the apparatus further comprises:

a digital image signal processor ISP, configured to perform image processing on an original image captured by a camera lens, and store an image processing result as the input image in the memory; and

when obtaining the first feature map from the memory, the NPU is specifically configured to: obtain the input image from the memory.

3. The apparatus according to claim 2, wherein when performing image processing on the original image captured by the camera lens, and storing the image processing result as the input image in the memory, the ISP is specifically configured to:

divide the original image into M original image blocks;

sequentially perform image processing on the M original image blocks to obtain M image blocks; and

asynchronously store the M image blocks as the M blocks in the memory, wherein the M image blocks are the image processing result.

4. The apparatus according to claim 2, wherein when performing image processing on the original image captured by the camera lens, and storing the image processing result as the input image in the memory, the ISP is specifically configured to:

perform image processing on the original image by block to obtain a plurality of image blocks; and

perform data synchronization on the plurality of image blocks to obtain the image processing result, and store the image processing result in the memory.

5. The apparatus according to claim 4, wherein the NPU is further configured to: divide the obtained first feature map into the M blocks.

6. The apparatus according to any one of claims 1 to 5, wherein the NPU comprises a plurality of processor cores, the plurality of processor cores share one cache, and the NPU is further configured to:

store the synchronized data in one of the memory and the cache.

7. The apparatus according to claim 6, wherein when storing the synchronized data in one of the memory and the cache, the NPU is specifically configured to:

compare a size of the synchronized data with a size of the cache; and

when the size of the synchronized data is greater than the size of the cache, store the synchronized data in the memory; or

when the size of the synchronized data is not greater than the size of the cache, store the synchronized data in the cache.

8. The apparatus according to claim 6 or 7, wherein the NPU is further configured to:

extract the synchronized data from the memory or the cache; and

use the synchronized data as a second feature map to perform inference computation at one or more layers of the neural network model.

9. The apparatus according to claim 8, wherein when using the synchronized data as the second feature map to perform inference computation at one or more layers of the neural network model, the NPU is configured to:

separately perform, in the asynchronous manner, inference computation at one or more layers of the neural network model on a plurality of blocks comprised in the second feature map.

10. The apparatus according to any one of claims 1 to 9, wherein data dependency exists between two adjacent blocks of the M blocks.

11. An apparatus for implementing data synchronization during neural network inference, comprising:

a computing engine comprising at least one processor core, configured to:

obtain a first feature map, wherein the first feature map comprises M blocks, and M is a positive integer;

separately perform, in an asynchronous manner, inference computation at at least two layers of a neural network model on the M blocks to obtain M inference results, wherein the asynchronous manner means that data synchronization is not performed on an intermediate result obtained after inference computation at one layer of the neural network model is performed on each block, and inference computation at a next layer continues to be performed on the intermediate result; and perform data synchronization on the M inference results to obtain synchronized data.

12. The apparatus according to claim 11, wherein the apparatus further comprises a cache, the at least one processor core shares the cache, and the computing engine is further configured to: store the synchronized data in the cache.

13. The apparatus according to claim 12, wherein the computing engine is specifically configured to: when a size of the synchronized data is not greater than a size of the cache, store the synchronized data in the cache.

14. The apparatus according to claim 12 or 13, wherein the NPU is further configured to:

extract the synchronized data from the cache; and use the synchronized data as a second feature map to perform inference computation at one or more layers of the neural network model.

15. The apparatus according to any one of claims 11 to 14, wherein data dependency exists between two adjacent blocks of the M blocks.

16. A method for implementing data synchronization during neural network inference, comprising:

obtaining, by a neural-network processing unit NPU, a first feature map, wherein the first feature map comprises M blocks, and M is a positive integer; separately performing, by the NPU in an asynchronous manner, inference computation at at least two layers of a neural network model on the M blocks to obtain M inference results, wherein the asynchronous manner means that data synchronization is not performed on an intermediate result obtained after inference computation at one layer of the neural network model is performed on each block, and inference computation at a next layer continues to be performed on the intermediate result; and performing, by the NPU, data synchronization on the M inference results to obtain synchronized data.

17. The method according to claim 16, wherein the first feature map is an input image, and before the obtaining, by an NPU, a first feature map, the method further comprises:

performing, by a digital signal processor ISP, image processing on an original image captured by a camera lens, and storing an image processing result as the input image in a memory, wherein the memory is an external memory of the NPU; and the obtaining, by an NPU, a first feature map comprises: obtaining, by the NPU, the input image from the memory.

18. The method according to claim 17, wherein the performing, by an ISP, image processing on an original image captured by a camera lens, and storing an image processing result as the input image in a memory comprises:

dividing, by the ISP, the original image into M original image blocks; sequentially performing, by the ISP, image processing on the M original image blocks to obtain M image blocks; and asynchronously storing, by the ISP, the M image blocks as the M blocks in the memory, wherein the M image blocks are the image processing result.

19. The method according to claim 17, wherein the performing, by an ISP, image processing on an original image captured by a camera lens, and storing an image processing result as the input image in a memory comprises:

performing, by the ISP, image processing on the original image by block to obtain a plurality of image blocks; and performing data synchronization on the plurality of image blocks to obtain the image processing result, and storing the image processing result in the memory.

20. The method according to any one of claims 16 to 19, wherein the NPU comprises a plurality of processor cores, the plurality of processor cores share one cache, and the method further comprises: storing, by the NPU, the synchronized data in one of the memory and the cache, wherein the memory is the external memory of the NPU.

21. The method according to claim 20, further comprising:

extracting, by the NPU, the synchronized data from the memory or the cache; and
using, by the NPU, the synchronized data as a second feature map to perform inference computation at one or more layers of the neural network model.

22. The method according to any one of claims 16 to 21, wherein data dependency exists between two adjacent blocks of the M blocks.

23. A computer-readable medium, wherein the computer-readable medium stores program code executed by a device, and the program code comprises instructions used to perform the method according to any one of claims 16 to 22.

24. A computer program product comprising instructions, wherein when the computer program product is run on a computer, the computer is enabled to perform the method according to any one of claims 16 to 22.

25. A chip, wherein the chip comprises a processor and a data interface, and the processor reads instructions through the data interface to perform the method according to any one of claims 16 to 22.

Camera → ISP → NPU

**FIG. 1**

Convolutional neural network (CNN) 200

Neural network layer 230

| Output layer 240 |
| Hidden layer n (23n) |
| Hidden layer 2 (232) |
| Hidden layer 1 (231) |

Convolutional layer/ Pooling layer 220

| 226 |
| 225 |
| 224 |
| 223 |
| 222 |
| 221 |

| Input layer 210 |

To-be-processed image

**FIG. 2**

**100**

Camera 101 → ISP 102 → Memory 103 ↔ NPU 104

NPU 104

Computing engine 1041

Processor core 1

Processor core 2

⋮

Processor core N

L2 cache 1042

FIG. 3

Separately perform inference computation in an $i^{th}$ stage on $M_i$ blocks included in a feature map in the $i^{th}$ stage, to obtain $M_i$ inference results — S401

Perform data synchronization on the $M_i$ inference results to obtain synchronized data — S402

If the size of the synchronized data is not greater than the size of the L2 cache

Compare a size of the synchronized data with a size of an L2 cache — S403

If the size of the synchronized data is greater than the size of the L2 cache

Store the synchronized data in the L2 cache — S405

Store the synchronized data in a memory — S404

Set i = i + 1 — S407

Determine whether i is N — S406

No

Yes

End inference computation — S408

FIG. 4

| Block A |
| --- |
| 0 |
| 1 |
| 2 |
| 3 |
| 4 |

| Block B |
| --- |
| 4 |
| 5 |
| 6 |
| 7 |
| 8 |

| Block C |
| --- |
| 8 |
| 9 |
| 10 |
| 11 |
| 12 |

FIG. 5

Processor core

| Input buffer | Matrix calculation unit | Accumulator |

Vector calculation unit

Output buffer

| Register | Scalar calculation unit |

FIG. 6

A digital signal processor ISP performs image processing on an original image captured by a camera lens, and stores an image processing result as an input image in a memory — S700

An NPU obtains a first feature map, where the first feature map includes M blocks, and M is a positive integer — S701

The NPU separately performs inference computation at at least two layers of a neural network model on the M blocks in an asynchronous manner, to obtain M inference results — S702

The NPU performs data synchronization on the M inference results to obtain synchronized data — S703

The NPU stores the synchronized data in one of the memory and a cache, where the memory is an external memory of the NPU — S704

The NPU extracts the synchronized data from the memory or the cache — S705

The NPU uses the synchronized data as a second feature map to perform inference computation at one or more layers of the neural network model — S706

FIG. 7

800 — Image processing module → 801 — Obtaining module → 802 — Inference module → 803 — Synchronization module

FIG. 8

## INTERNATIONAL SEARCH REPORT

| International application No. |
| --- |
| **PCT/CN2019/130638** |

### A. CLASSIFICATION OF SUBJECT MATTER

G06N 3/08(2006.01)i

According to International Patent Classification (IPC) or to both national classification and IPC

### B. FIELDS SEARCHED

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 神经网络, 同步, 特征图, neural network, synchronization, characteristic pattern

### C. DOCUMENTS CONSIDERED TO BE RELEVANT

| Category* | Citation of document, with indication, where appropriate, of the relevant passages | Relevant to claim No. |
| --- | --- | --- |
| X | CN 107704924 A (INSTITUTE OF AUTOMATION, CHINESE ACADEMY OF SCIENCES) 16 February 2018 (2018-02-16) <br> description, paragraphs [0084]-[0105], and figures 1-6 | 1-25 |
| A | CN 109543754 A (SUN YAT-SEN UNIVERSITY) 29 March 2019 (2019-03-29) <br> entire document | 1-25 |
| A | CN 106875012 A (WUHAN MEITONG TECHNOLOGY CO., LTD.) 20 June 2017 (2017-06-20) <br> entire document | 1-25 |
| A | US 2019012559 A1 (TEXAS INSTRUMENTS INCORPORATED) 10 January 2019 (2019-01-10) <br> entire document | 1-25 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 September 2020** | **28 September 2020** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/130638**

| Patent document cited in search report | | | Publication date (day/month/year) | Patent family member(s) | Publication date (day/month/year) |
|---|---|---|---|---|---|
| CN | 107704924 | A | 16 February 2018 | None | |
| CN | 109543754 | A | 29 March 2019 | None | |
| CN | 106875012 | A | 20 June 2017 | None | |
| US | 2019012559 | A1 | 10 January 2019 | None | |

Form PCT/ISA/210 (patent family annex) (January 2015)